# EUROPÄISCHE PATENTANMELDUNG

(11) **EP 4 545 849 A1**
(43) Veröffentlichungstag der Anmeldung: **30.04.2025**
(21) Anmeldenummer: 23205571.5
(22) Anmeldetag: 24.10.2023
(51) Int. Cl.: F21S 43/27, F21V 8/00, B60Q 3/64

(54) **TRANSPARENTE SCHEIBE MIT EINER HALTEVORRICHTUNG FÜR LICHTLEITFASERN**

(71) Anmelder: ZKW Group GmbH, 3250 Wieselburg (AT)
(72) Erfinder: Kosmas, Kyriakos, 3681 Hofamt Priel (AT); Hölzl, Andreas, 3250 Wieselburg (AT); Müller, Anke, 3375 Krummnussbaum (AT); Gruber, Christian, 3304 Sankt Georgen am Ybbsfelde (AT); Ratzinger, Ernst, 3381 Golling an der Erlauf (AT); Salzer, Michael, 3261 Wolfpassing (AT)
(74) Vertreter: Patentanwaltskanzlei Matschnig & Forsthuber OG

(57) **Zusammenfassung**

Die Erfindung betrifft eine transparente Scheibe (1), wobei die Scheibe (1) einen für Licht transparenten Scheibenkörper (1a), der von einer ersten Fläche (2) - als Außenfläche (2) bezeichnet - und einer der ersten Fläche (2) gegenüberliegenden zweiten Fläche (3) - als Innenfläche (3) bezeichnet - begrenzt wird, wobei an dem Scheibenkörper (1a) zumindest eine Haltevorrichtung (10) zur Halterung von zumindest einer Lichtleitfaser (50) an dem Scheibenkörper (1a) angeordnet ist. Die Haltevorrichtung (10) ist an der Innenfläche (3) des Scheibenkörpers (1a) angebracht und die Haltevorrichtung (10) weist zumindest eine Vertiefung (11) auf, die sich über eine Länge (L) entlang der Innenfläche (3) und im Wesentlichen parallel zu der Innenfläche (3) erstreckt, wobei die zumindest eine Vertiefung (11) in einem von dem Scheibenkörper (1a) abgewandten Bereich (12) offen ausgebildet ist, sodass zumindest eine Lichtleitfaser (50) von einer der Innenfläche (3) des Scheibenkörpers (1a) abgewandten Seite in die zumindest eine Vertiefung (11) eingesetzt werden kann, und wobei weiters Haltemittel (20) vorgesehen sind, mit welchen die zumindest eine in der zumindest einen Vertiefung (11) angeordnete Lichtleitfaser (50) gehalten werden kann.

## Beschreibung

Die Erfindung betrifft eine Transparente Scheibe, wobei die Scheibe einen für Licht transparenten Scheibenkörper, der von einer ersten Fläche - als Außenfläche bezeichnet - und einer der ersten Fläche gegenüberliegenden zweiten Fläche - als Innenfläche bezeichnet - begrenzt wird, wobei an dem Scheibenkörper zumindest eine Haltevorrichtung zur Halterung von zumindest einer Lichtleitfaser an dem Scheibenkörper angeordnet ist.

Lichtleitfasern kommen beispielsweise in Kfz-Scheinwerfern und Kfz-Beleuchtungsvorrichtungen in verschiedensten Anwendungen zum Einsatz, beispielsweise in Tagfahrlicht- und Positionslampen, in Blinkern, zur Erzeugung von Lichtverteilungen, beispielsweise auch in adaptiven Scheinwerfern, oder als Design-Elemente, indem Lichtleitfasern in verschiedenen Formen und Mustern gestaltet und angeordnet werden, um ästhetische Designelemente im Scheinwerfer bzw. in der Beleuchtungsvorrichtung zu erzeugen. Dies ermöglicht den Fahrzeugherstellern, individuelle und auffällige Scheinwerferdesigns zu kreieren, die zur Identität des Fahrzeugs beitragen und der Individualisierung eines Fahrzeuglenkers dienen.

Solche Beleuchtungsvorrichtungen verfügen häufig über zumindest eine Lichtquelle, mit welcher beispielsweise eine oder mehrere Lichtverteilungen (Abblendlicht, Fernlicht, usw.) oder Signallicht-Funktionen (z.B. Abbiegelicht, ...) erzeugt werden können. Bei der zumindest einen Lichtquelle kann es sich z.B. um eine oder mehrere LED's handeln, aber auch um eine komplexere Anordnung aus Licht emittierenden Elemente, wie LED's, die im Zusammenspiel mit Lichtformungsmitteln (z.B. Reflektoren, Projektionslinsen, Lichtleitkörpern, usw.) die gewünschte(n) Lichtverteilung(en) oder Lichtfunktion(en) erzeugen.

Für die Lichtfaser bzw. die Lichtfasern ist bzw. sind in der Regel ein oder mehrere eigene Zusatzlichtquellen vorgesehen, mit welcher bzw. welchen Licht an einem oder den Enden der Lichtleitfaser(n) in diese eingespeist und wird und sich in dieser bzw. diesen in Längsrichtung der Lichtleitfaser(n) fortpflanzt und aus dieser bzw. diesen, beispielsweise durch Lichtstreuung an der Mantelfläche der Lichtleitfaser, austritt, sodass die Lichtleitfaser leuchtet.

Bei typischen Anwendungen sind die Lichtleitfasern an einem Halter, welcher in einem Gehäuse, etwa dem Gehäuse eines Kfz-Frontscheinwerfers- oder einer Kfz-Rückleuchte, oder in einem Gehäuse einer Beleuchtungsvorrichtung, die an einem Fahrzeugseitenbereich montiert ist, angebracht.

Das Gehäuse einer solchen Beleuchtungsvorrichtung, in welchem typischer Weise die eine oder die mehrere Lichtquellen angeordnet sind, wird von einer lichtdurchlässigen, transparenten Scheibe, die im Zusammenhang mit Beleuchtungsvorrichtungen für ein Kraftfahrzeug häufig als Abschlussscheibe oder Abdeckscheibe bezeichnet wird, abgedeckt oder verschlossen. Die Scheibe ist dabei zumindest in einem Teil des Wellenlängenbereiches des von der zumindest einen Lichtquelle emittierten Lichtes transparent, typischer Weise liegt dieser Wellenlängenbereich im sichtbaren und/oder IR-Wellenlängenbereich.

Generell ist es wünschenswert, die Lichtleitfaser möglichst nahe zu der transparenten Scheibe zu positionieren, um einen optimalen Beleuchtungseffekt zu erzielen, was insbesondere im Zusammenhang mit der Verwendung der Lichtleitfaser als Designelement von Vorteil ist. Beispielsweise ist zur optimalen Erzielung sogenannter "linearer" Beleuchtungseffekte bzw. eine linearer Beleuchtungserscheinungen, bei welche sich Leuchtmuster ergeben, die in eine Richtung eine große Ausdehnung und in der Querrichtung dazu eine geringe Ausdehnung aufweisen; es entstehen schmale, strichförmige Lichteindrücke, die z.B. als Kontur- oder Designlinien wirken, eine solche Positionierung von Vorteil.

Es gibt Lösungen, bei welchen die Lichtleitfaser direkt in einer Abschlussscheibe bzw. Abdeckscheibe angeordnet ist, wie beispielsweise in der DE 10 2017 205 628 A1 beschrieben. In diesem Dokument ist beschrieben, dass ein Lichtleiter von der Außenseite einer Abschlussscheibe in eine längsförmige Vertiefung in der Abschlussscheibe eingesetzt werden kann, wozu beispielsweise ein "Aufbiegen" der Abschlussscheibe im Bereich der Vertiefung vorgesehen ist; diese Aufbiegung des Materials kehrt im Falle eines elastischen Materials wieder weitestgehend in den Ausgangszustand zurück.

Nachteilig an dieser Lösung ist, dass in jedem Fall ein Eingriff in die Abschlussscheibe, insbesondere von der Außenseite her erfolgen muss, der zu optischen Störstellen oder Störbereichen an der Abschlussscheibe führen kann, was einerseits die Optik der Abschlussscheibe an sich und andererseits die Funktion der Abschlussscheibe in optischer Hinsicht beeinträchtigen kann.

Die Verwendung von Lichtleitfasern im Zusammenhang mit einer transparenten Scheibe ist allerdings nicht nur im Kraftfahrzeug-Beleuchtungsbereich interessant, vielmehr kann die Verwendung von Lichtleitfasern auch im Zusammenhang mit allgemeinen Beleuchtungsvorrichtungen, z.B. Beleuchtungsvorrichtungen für die Beleuchtung von Wohn- oder Arbeitsräumen, Straßenbeleuchtungen, usw., bei welchen über eine lichtdurchlässige, transparente Scheibe vorgesehen ist, welche beispielsweise ein Gehäuse der Beleuchtungsvorrichtung abschließt, von Interesse sein.

Auch bei solchen Anwendungen ist typischer Weise zumindest eine Lichtquelle zur Realisierung einer Grundfunktion der Beleuchtungsvorrichtung vorgesehen, die zumindest eine Lichtleitfaser dient - unter Verwendung von zumindest einer Zusatzlichtquelle - zur Realisierung einer Zusatzlichtfunktion, beispielsweise zur Realisierung eines Designlichtes.

Es ist eine Aufgabe der Erfindung, eine Lösung dafür anzugeben, wie eine Lichtleitfaser bzw. Lichtleitfasern möglichst nahe an einer transparenten Scheibe, etwa einer Abdeckscheibe positioniert werden kann bzw. können.

Diese Aufgabe wird mit einer eingangs genannten Abdeckscheibe erfindungsgemäß dadurch gelöst, dass die Haltevorrichtung an der Innenfläche des Scheibenkörpers angebracht ist und die Haltevorrichtung zumindest eine Vertiefung aufweist, die sich über eine Länge entlang der Innenfläche und im Wesentlichen parallel zu der Innenfläche erstreckt, wobei die zumindest eine Vertiefung in einem von dem Scheibenkörper abgewandten Bereich offen ausgebildet ist, sodass zumindest eine Lichtleitfaser von einer der Innenfläche des Scheibenkörpers abgewandten Seite in die zumindest eine Vertiefung eingesetzt werden kann, und wobei weiters Haltemittel vorgesehen sind, mit welchen die zumindest eine in der zumindest einen Vertiefung angeordnete Lichtleitfaser gehalten werden kann.

Erfindungsgemäß ist an der Innenfläche des Scheibenkörpers eine Haltevorrichtung, insbesondere in Form einer von der Innenseite abstehenden Struktur, die - vorzugsweise möglichst geringfügig - in das Gehäuse ragt, vorgesehen. Mit dieser Haltevorrichtung können eine oder mehrere Lichtleitfasern nahe an der Abdeckscheibe bzw. dem Scheibenkörper gehalten werden.

Weitere vorteilhafte Ausgestaltungen der Erfindung sind in den abhängigen Ansprüchen beschrieben.

Vorzugsweise ist vorgesehen, dass die Haltevorrichtung aus demselben Material wie der Scheibenkörper gebildet ist.

Es kann von Vorteil sein, wenn die Haltevorrichtung einstückig mit dem Scheibenkörper ausgebildet ist.

Bevorzugt ist vorgesehen, dass die Haltevorrichtung von der Innenfläche des Scheibenkörpers abstehend, insbesondere senkrecht abstehend ausgebildet ist.

Mit Vorteil kann vorgesehen sein, dass die Vertiefung über ihre Länge durchgehend ausgebildet ist oder ein oder mehreren Unterbrechungen aufweist.

Im ersten Fall erstreckt sich die Vertiefung durchgehend weitestgehend über die gesamte Länge der Lichtleitfaser, zumindest über jene Länge der Lichtleitfaser, welche im Bereich des Scheibenkörpers angeordnet ist. In den anderen Fällen weist die Vertiefung ein oder mehrere Unterbrechungen auf, insbesondere dadurch, dass in den Unterbrechungsbereichen keine Haltevorrichtung vorgesehen ist und dementsprechend die Haltevorrichtung sich in zwei oder mehrere voneinander getrennte, zueinander beabstandete Bereiche unterteilt ist, in jenen sich jeweils Abschnitte der Vertiefung befinden.

Von besonderem Vorteil ist es, wenn die Haltevorrichtung zumindest teilweise aus einem lichtdurchlässigen Material gebildet ist.

Die Haltevorrichtung umfasst einen oder mehrere Bestandteile, in welchen die Vertiefung ausgebildet ist, wobei diese Bestandteile mit dem Scheibenkörper verbunden sind. Wenn diese Bestandteile lichtdurchlässig ausgebildet sind, kann das aus der Lichtleitfaser austretende Licht durch diese Bestandteile der Haltevorrichtung durchtreten und anschließend durch den transparenten Scheibenkörper nach Außen austreten. Die Haltevorrichtung kann auch noch andere, nicht mit dem Scheibenkörper verbundene Bestandteile umfassen, welche in der Regel nicht im Strahlengang des aus der Lichtleitfaser austretenden Lichtes liegen; solche Bestandteile können auch lichtundurchlässig ausgebildet sein.

Beispielsweise bei den im Folgenden beschriebenen Varianten, bei welchen eine Vertiefung von Wangen begrenzt wird, können diese Wangen auch aus einem lichtundurchlässigen Material gebildet sein, da durch diese kein Licht durchtreten muss. Die Wangen wirken in diesem Fall als Abschattungsblenden und unterdrücken ein Übersprechen von Licht, insbesondere bei parallelen Lichtstrichen bzw. Lichtlinien, die nahe aneinander angeordnet sind, und durch diese Abschattungsblenden als getrennte Linien erscheinen. Es können somit Helligkeit-Kontraste bzw. auch Farbunterschiede klarer hervortreten.

Wird der Vertiefungsboden von dem Scheibenkörper selbst gebildet, kann durch diesen ohnehin Licht ungehindert durchtreten. Wird der Vertiefungsboden hingegen von einem zusätzlichen Material, welches auf der Innenfläche des Scheibenkörpers angebracht ist, gebildet, so ist vorzugsweise dieser Vertiefungsboden aus einem transparenten Material gebildet.

Bei einer Ausführungsform der Erfindung kann vorgesehen sein, dass die zumindest eine Vertiefung nutförmig ausgebildet ist und von der Innenfläche des Scheibenkörpers abstehende, vorzugsweise zueinander in Längserstreckung der zumindest einen Vertiefung parallel verlaufende, Nutwangen aufweist, und wobei die Haltemittel von den Nutwangen gebildet sind, indem die Nutwangen derart ausgebildet und zueinander angeordnet sind, dass sie eine in die zumindest eine nutförmige Vertiefung eingesetzte Lichtleitfaser in der Vertiefung einklemmen.

Die Haltevorrichtung besteht beispielsweise aus einem Haltevorrichtungs-Körper, in welchem die Vertiefung in Form einer Nut ausgebildet ist.

Es kann in diesem Zusammenhang, aber auch generell, im allgemeinen Zusammenhang und nicht beschränkt auf die vorliegend beschriebene Ausführungsform vorgesehen sein, dass die Lichtleitfaser mit einer transparenten, optional färbigen Ummantelung, beispielsweise in der Art eines transparenten Schlauches ummantelt ist. Mit einer solche Ummantelung können auch zwei oder mehr Lichtleitfasern gleichzeitig ummantelt sein.

Die Ummantelung kann dabei, insbesondere im Falle einer Lichtleitfaser, diese vollständig, insbesondere um den ganzen Umfang herum, ummanteln; es kann aber auch vorgesehen sein, dass die Ummantelung nur über einen Teil des Umfanges der Lichtleitfaser herum angeordnet ist.

Die in der Nut eingebettete Lichtleitfaser oder der Lichtleitfaser-Schlauch kann direkt in der Nut eingeklemmt werden, optional kann noch vorgesehen sein, dass der frei bleibende Bereich in der Nut zwischen Nutboden, Nutwangen und Lichtleitfaser bzw. Schlauch mit einem Füllmaterial, ausgefüllt ist, wodurch die Verbindung in der Nut stabilisiert wird, wozu vorzugsweise das Material nach dem Einbringen auf geeignete Weise ausgehärtet wird.

Bei einer anderen Ausführungsform kann vorgesehen sein, dass die zumindest eine Vertiefung von Wangen, die von der Innenfläche des Scheibenkörpers abstehen und vorzugsweise in Längserstreckung der zumindest einen Vertiefung zueinander parallel verlaufen, gebildet ist, und wobei die Haltemittel zumindest ein Haltelement umfassen, in welchem die zumindest eine Lichtleitfaser festsitzend angeordnet ist, und wobei das zumindest eine Halteelement derart ausgebildet ist, dass bei einem Zusammenfügen des Haltelementes mit der Haltevorrichtung die zumindest eine Lichtleitfaser in die Vertiefung eingesetzt ist, und wobei die Haltemittel weiters Fixiermittel umfassen, mit welchen das Halteelement an der Haltevorrichtung fixierbar ist.

Die Vertiefung kann wiederum nutförmig ausgebildet sein.

Dabei kann vorgesehen sein, dass die zumindest eine Lichtleitfaser mit dem zumindest einen Haltelement verklebt ist und/oder das Haltelement mechanische Mittel zur Halterung der zumindest einen Lichtleitfaser aufweist.

Die mechanischen Mittel können beispielsweise dadurch realisiert sein, dass in dem Halteelement eine Vertiefung, begrenzt von zwei Wangen, etwa in Form einer Nut, vorgesehen ist, in welcher Vertiefung die Lichtleitfaser eingeklemmt oder eingeklipst werden kann, oder alternativ oder zusätzlich in dieser Vertiefung verklebt ist.

In diesem Zusammenhang sei nochmals auf die weiter oben getätigten Ausführungen verwiesen, wonach die Formulierung *"zumindest eine Lichtleitfaser* ... *gehalten*/*fixiert*/*etc."* bedeuten kann, dass eine, aber auch zwei oder mehr Lichtleitfasern direkt von der jeweiligen Struktur gehalten/fixiert/etc. sind, dass diese Formulierung aber auch bedeuten kann, dass eine oder mehrere Lichtleitfasern, wie weiter oben beschrieben, mit einer Ummantelung versehen sind und diese Ummantelung gehalten/fixiert/etc. ist.

Das Halteelement kann transparent oder zumindest teilweise aus einem intransparenten Material gebildet sein.

Weiters kann vorgesehen sein, dass das Haltelement und die Fixiermittel derart ausgebildet sind, dass die Lichtleitfaser der Innenfläche des Scheibenkörpers mit einer freiliegenden Lichtleitfaser-Fläche zugewandt ist.

Insbesondere kann vorgesehen sein, dass die Fixiermittel Klebemittel oder eine mechanische Verbindung zwischen dem zumindest einen Halteelement und der Haltevorrichtung, z.B. ein Verklipsen des zumindest einen Halteelementes mit der Haltevorrichtung, oder eine Schweißverbindung zwischen dem zumindest einen Halteelement und der Haltevorrichtung umfassen. Das Klebemittel kann beispielsweise flüssiges Silikon sein, welches ein Klebebett bildet, in das die Lichtleitfaser eingelegt wird und welches anschließend aushärtet.

Das Haltelement selbst kann an der Haltevorrichtung somit z.B. geklebt, (laser-)geschweißt oder geklammert. Das Halteelement kann komplementär zu der Haltevorrichtung ausgebildet sein, sodass es formschlüssig von diesem gehalten wird.

Es kann vorgesehen sein, dass die Fixiermittel zumindest ein elastisches ausgebildetes Federelement umfassen, welches vorzugsweise in der Vertiefung angeordnet ist, und welches bei in die Vertiefung eingesetztem Halteelement eine Rückstellkraft auf das Halteelement bzw. auf die zumindest eine Lichtleitfaser derart ausübt, dass das Halteelement in der Vertiefung gehalten ist.

Bei einer Ausführungsform der Erfindung kann vorgesehen sein, dass die zumindest eine Vertiefung von Wangen, die von der Innenfläche des Scheibenkörpers abstehen und vorzugsweise in Längserstreckung der zumindest einen Vertiefung zueinander parallel verlaufen, gebildet ist, und wobei zumindest eine Lichtleitfaser in die zumindest eine Vertiefung eingesetzt werden kann, wobei eine Höhe der Wangen gemessen von der Innenfläche des Scheibenkörpers derart ist, dass die zumindest eine Lichtleitfaser aus der Vertiefung hervorsteht oder gerade nicht hervorsteht, und wobei die Haltemittel eine Folie umfassen, welche auf den Wangen derart auffoliert ist, dass die zumindest eine Lichtleitfaser in die Vertiefung, und vorzugsweise gegen die Innenfläche des Scheibenkörpers, gepresst ist.

Die Folie dient quasi als Einkapselungsmittel zur Einkapselung der zumindest einen Lichtleitfaser bzw. des Lichtleitfaser-Schlauches in der Vertiefung.

Beispielsweise ist vorgesehen, dass die Scheibe dazu eingerichtet ist, ein Gehäuse der Beleuchtungsvorrichtung zu verschließen, wobei die Innenfläche des Scheibenkörpers in einem an der Beleuchtungsvorrichtung befestigten Zustand der Scheibe einem Gehäuseinnenraum, der von der Scheibe und dem Gehäuse gebildet wird, zugewandt ist.

Weiters betrifft die Erfindung noch ein Abdeckscheibensystem umfassend eine Abdeckscheibe nach einem der vorhergehenden Ansprüche sowie eine oder mehrere Lichtleitfasern, welche von der Haltevorrichtung an dem Scheibenkörper gehalten ist bzw. sind.

Außerdem betrifft die Erfindung eine Beleuchtungsvorrichtung mit einer transparenten Scheibe, wobei die transparente Scheibe eine vorstehend beschriebene Scheibe ist.

Vorzugsweise ist vorgesehen, dass die Beleuchtungsvorrichtung ein oder mehrere Zusatzlichtquellen umfasst, welche dazu eingerichtet ist/sind, Licht in die zumindest eine Lichtleitfaser, welche an der Abdeckscheibe gehalten ist, einzuspeisen.

Weiters kann vorgesehen sein, dass die Beleuchtungsvorrichtung zumindest eine Lichtquelle umfasst, wobei die Beleuchtungsvorrichtung dazu eingerichtet ist, mit der zumindest einen Lichtquelle ein oder mehrere Lichtfunktionen zu realisieren, wobei die transparente Scheibe derart im Strahlengang der zumindest einen Lichtquelle derart ist, dass von der zumindest einen Lichtquelle emittiertes Licht auf die Innenfläche des Scheibenkörpers auftreffen und durch diesen durchtreten kann.

Beispielsweise weist die Beleuchtungsvorrichtung ein Gehäuse auf, welches von der Scheibe abgeschlossen ist, wobei die zumindest eine Lichtquelle und/oder die zumindest eine Zusatzlichtquelle in dem Gehäuse angeordnet ist bzw. sind.

Beispielsweise ist die Beleuchtungsvorrichtung als Wohnraum- oder Arbeitsraumbeleuchtungsvorrichtung ausgebildet, beispielsweise als Deckenleuchte oder Stehleuchte, oder als Straßenbeleuchtung, leuchtendes Hinweisschild oder Fassaden-Außenbeleuchtungsvorrichtung.

Schließlich betrifft die Erfindung noch eine Kraftfahrzeugleuchte, wobei die Kraftfahrzeugleuchte als Kraftfahrzeugscheinwerfer oder Heckleuchte ausgebildet ist oder in einem Kraftfahrzeugscheinwerfer oder in einer Heckleuchte angeordnet ist, oder als Fahrzeuginnenraumleuchte oder als Fahrzeug-Bodenprojektionsleuchte ausgebildet ist, wobei die Kraftfahrzeugleuchte zumindest eine vorstehend beschriebene Beleuchtungsvorrichtung umfasst.

Im Folgenden ist die Erfindung an Hand der Zeichnung näher erörtert. In dieser zeigt
Fig. 1 grob schematisch die Abdeckscheibe einer Rückleuchte mit Lichtleitfasern,
Fig. 2 eine Beleuchtungsvorrichtung in Form einer Kraftfahrzeugscheinwerfer-Beleuchtungsvorrichtung,
Fig. 3 eine Beleuchtungsvorrichtung in Form einer allgemeinen Beleuchtungsvorrichtung,
Fig. 3a ein weiteres Beispiel einer Beleuchtungsvorrichtung,
Fig. 4a rein schematisch einen Abschnitt einer Innenfläche einer Abdeckscheibe mit beispielhaften Haltevorrichtungen und Lichtleitfasern,
Fig. 4b eine weitere rein schematische Darstellung wie in Figur 4a,
Fig. 5 einen Lichtleitfaser-Schlauch umfassend mehrere Lichtleitfasern, welche mit einer Ummantelung versehen,
Fig. 6 ein erstes Beispiel einer erfindungsgemäßen Abdeckscheibe in einer perspektivischen Ansicht von schräg hinten,
Fig. 6a einen Schnitt durch die Abdeckscheibe aus Figur 6 im Bereich einer Haltevorrichtung,
Fig. 6b einen Schnitt durch eine Abdeckscheibe analog zu der Abdeckscheibe aus Figur 6, mit anders ausgestalteter Haltevorrichtung,
Fig. 6c einen weiteren Schnitt analog zu Figur 6a, mit einer nochmals anders gestalteten Haltevorrichtung,
Fig. 7 ein zweites Beispiel einer erfindungsgemäßen Abdeckscheibe in einer perspektivischen Ansicht von schräg hinten,
Fig. 7a & 7b einen Schnitt durch die Abdeckscheibe aus Figur 7,
Fig. 7c eine Detailansicht einer beispielhaften Vertiefung bei der Ausführungsform gemäß Figur 7,
Fig. 8 noch ein weiteres Beispiel einer erfindungsgemäßen Abdeckscheibe in einer perspektivischen Ansicht von schräg hinten, und
Fig. 8a einen Schnitt durch die Abdeckscheibe aus Figur 8.

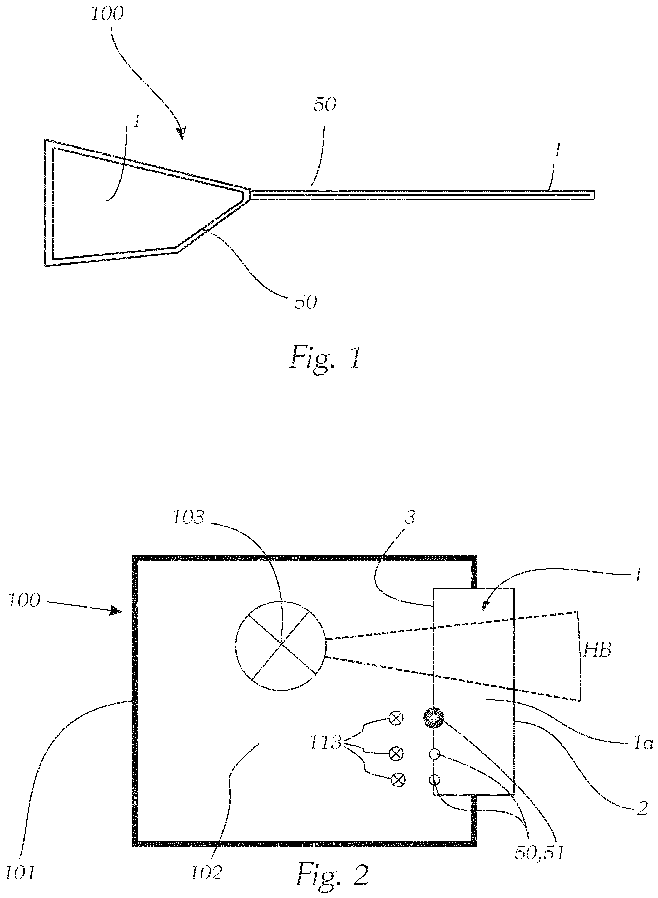

**Figur 1** zeigt rein schematisch die transparente Scheibe in Form einer Scheibe 1, z.B. einer Abdeckscheibe einer Beleuchtungsvorrichtung 100 für ein Kraftfahrzeug, die in diesem Beispiel konkret in Form einer Rückleuchte dargestellt ist, sowie einer linienförmigen Anordnung von zwei Lichtleitfasern 50 auf der Abdeckscheibe 1. Mit einer solchen Anordnung können beispielsweise Design-Effekte bzw. eine besondere optische Erscheinung, generell oder bei Rückleuchten oder einem Fahrzeugscheinwerfer verwirklicht werden, die es den Herstellern der Beleuchtungsvorrichtung, z.B. Fahrzeugherstellern erlaubt, das Aussehen ihrer Fahrzeuge zu individualisieren.

**Figur 2** zeigt eine Beleuchtungsvorrichtung 100 in Form eines Fahrzeugscheinwerfers in einer grob schematischen Seitenansicht. Die Beleuchtungsvorrichtung 100 verfügt über zumindest eine Lichtquelle 103, welche in einem Gehäuse 101 angeordnet ist. Das Gehäuse 101 umschließt einen Gehäuseinnenraum 102, welcher mit einer transparenten Scheibe 1, der sogenannten Abdeckscheibe, verschlossen ist.

Mit der Lichtquelle 103 können beispielsweise eine oder mehrere Lichtverteilungen (Abblendlicht, Fernlicht, usw.) oder Signallicht-Funktionen (z.B. Abbiegelicht, ...) erzeugt werden. Bei der Lichtquelle 103 kann es sich z.B. um eine oder mehrere LED's handeln, aber auch um eine komplexere Anordnung aus Licht emittierenden Elemente, wie LED's, die im Zusammenspiel mit Lichtformungsmitteln (z.B. Reflektoren, Projektionslinsen, Lichtleitkörpern, usw.) die gewünschte(n) Lichtverteilung(en) oder Lichtfunktion(en) erzeugen. Natürlich können in dem Gehäuse auch zwei oder mehrere solcher Lichtquellen vorgesehen sein.

Die Scheibe 1 besteht aus einem Scheibenkörper 1a, der von einer Innenfläche 3, welcher der Lichtquelle 103 bzw. dem Gehäuseinneren zugewandt ist, und einer Außenfläche 2, welche nach Außen gewandt ist, und die Beleuchtungsvorrichtung 100 zum Außenraum hin begrenzt.

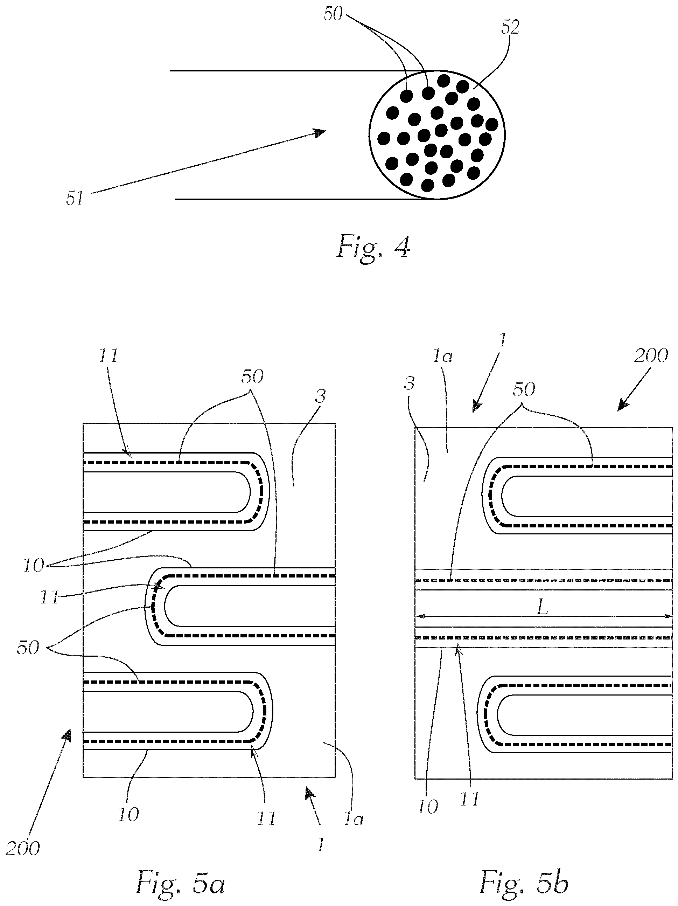

Rein schematisch ist in dieser **Figur 2** weiters dargestellt, dass an der Innenfläche 3 des Scheibenkörpers 1a zwei Lichtleitfasern 50 sowie ein Lichtleitfaser-Schlauch 51 angeordnet sind. Bezüglich des Begriffes Lichtleitfaser-Schlauch 51 wird auf die Beschreibung weiter unten in Zusammenhang mit **Figur 4** verwiesen.

Die Lichtleitfasern 50 und der Lichtleitfaser-Schlauch 51 werden mit Licht aus zumindest einer Zusatzlichtquelle 113, beispielsweise von einer LED- oder Laserlichtquelle, die z.B. auf einem Print in der Beleuchtungsvorrichtung 100 montiert sein kann (z.B. auf dem Print, auf dem die Lichtquelle 103 angeordnet ist), in die Lichtleitfaser 50 sowie den Lichtleitfaser-Schlauch 51 eingekoppelt. Häufig wird ein Kopplungselement verwendet, das wie ein Stecker die Lichtleitfaser mit der Lichtquelle verbindet, wobei die Verbindung typischer Weise erst hergestellt wird, wenn die Abdeckscheibe (einschließlich der Lichtleitfaser) auf das Gehäuse der Beleuchtungsvorrichtung 100 montiert wird.

Mit der gezeigten rein beispielhaften Anordnung kann eine homogene Konturbeleuchtung auf der Abschlussscheibe durch die Lichtleitfasern 50 bzw. den Lichtleitfaser-Schlauch 51 erzeugt werden.

An dieser Stelle sei im allgemeinen Zusammenhang, nicht auf eine bestimmte Ausführungsform beschränkt, festgehalten, dass die Scheibe eine Klarscheibe sein kann, dass die Scheibe aber auch zumindest bereichsweise, aber auch vollständig z.B. in der Art eines Milchglases ausgebildet sein kann, indem es z.B. aufgeraut ist, bereichsweise gefärbt oder getönt sein kann, optische Strukturen aufweisen kann, und auch Bereiche aufweisen kann, die nicht lichtdurchlässig sind, sowie jede beliebige Kombination dieser Möglichkeiten.

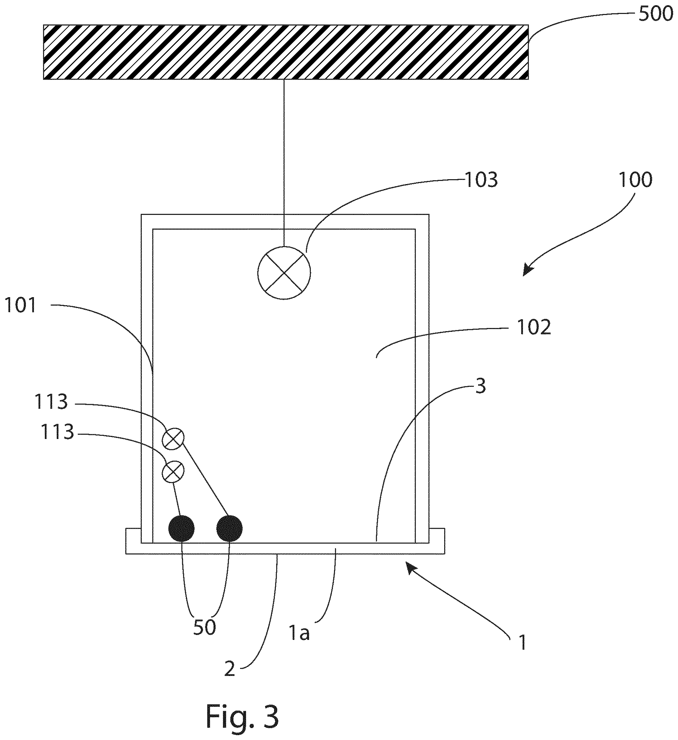

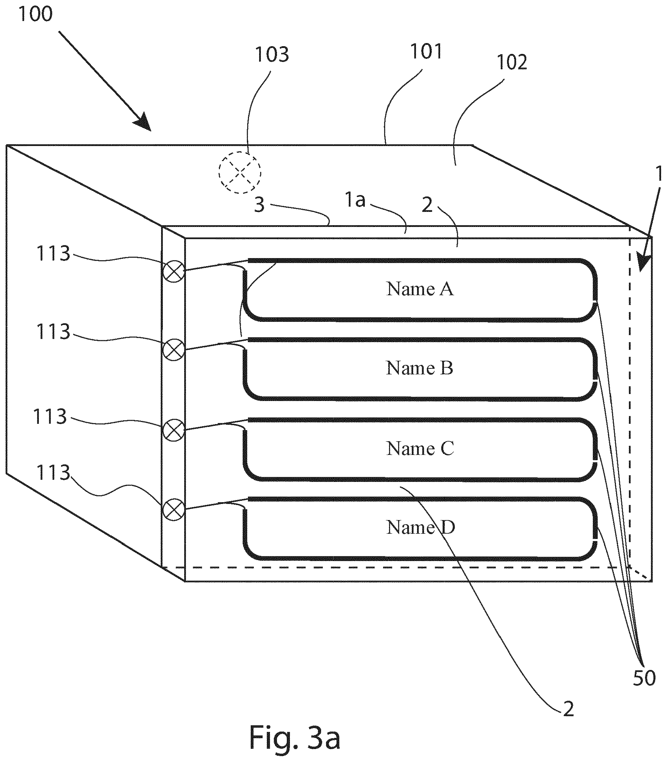

**Figur 3** zeigt ein weiteres Beispiel einer Beleuchtungsvorrichtung 100, in diesem Fall einer Deckenleuchte für einen Innenraum, die an einer Decke 500 in dem Innenraum hängend befestigt ist. Auch in diesem Fall weist die Beleuchtungsvorrichtung 100 ein Gehäuse 101 und einen Gehäuseinnenraum 102 auf, in dem eine Lichtquelle 103 zur Realisierung einer gewünschten Beleuchtungsfunktion angeordnet ist. Im Strahlengang der Lichtquelle 103 befindet sich eine transparente Scheibe 1 umfassend einen Scheibenkörper 1a, Innenfläche 3 und Außenfläche 2.

Wiederum sind Zusatzlichtquelle 113 zur Einspeisung von Licht in Lichtleitfasern 50, welche an der Innenfläche 3 des Scheibenkörpers 1a angebracht sind, vorgesehen.

Auch wenn in diesem Beispiel wieder ein Gehäuse 101 dargestellt ist, welches von der Scheibe 1 abgeschlossen wird, so muss ein solches Gehäuse 101 nicht zwingend vorgesehen sein. Generell ist bei erfindungsgemäßen Beleuchtungsvorrichtungen lediglich zumindest vorgesehen, dass die Scheibe 1 im Strahlengang der (oder zumindest einer der mehreren) Lichtquelle(n) 103 der Beleuchtungsvorrichtung 100 angeordnet ist.

**Figur 3a** zeigt als letztes Beispiel eine Beleuchtungsvorrichtung 100 in Form einer Anzeigetafel, bei welcher auf oder hinter einer transparenten Scheibe 1 Informationen "Name A", "Name B", "Name C", "Name D" dargestellt sind, und diese Informationen sind mit jeweils mit einem Leuchtband in Form einer Lichtleitfaser 50 umrahmt. Jede Lichtleitfaser 50 wird von einer Zusatzlichtquelle 113 mit Licht gespeist, wobei die Zusatzlichtquellen 113, beispielsweise LEDs, farbiges Licht abgeben können, z.B. rot, blau, grün und amber, sodass unterschiedliche Farbeffekte erzeugt werden können.

Die Begriffe "NAME A" stellen Platzhalter-Elemente für Information in beliebiger Form, sei es grafisch und/oder textliche, in Form von Pilktogramme, etc. dar. Diese Platzhalter-Elemente können einfache Aufdrucke sein, die an/ auf der Außenfläche 2 oder der Innenfläche 3 angebracht sein können. Die zumindest eine Lichtquelle 103 beleuchtet Platzhalte-Elemente von der Rückseite, wie dies in der Figur dargestellt ist.

Es muss allerdings nicht zwingend eine Lichtquelle 103 vorgesehen sein, sodass in diesem Fall die Beleuchtungsvorrichtung als Lichtquellen "lediglich" eine oder mehrere Zusatzlichtquellen aufweist.

Es kann sich aber auch um ein Display bzw. einen Flachbildschirm handeln, sodass unterschiedliche, auch sich ändernde Informationen dargestellt werden, wobei in diesem Fall eine mehrere, insbesondere eine Vielzahl an Lichtquellen vorgesehen sind.

In weiterer Folge wird häufig, wie oben schon angesprochen, von "einer" oder von "zumindest einer" Lichtleitfaser die Rede sein. Unter Verweis auf **Figur 4** soll an dieser Stelle angemerkt werden, dass generell, im allgemeinen Zusammenhang und nicht beschränkt auf eine konkrete Ausführungsform, eine Lichtleitfaser 50 mit einer transparenten, optional färbigen Ummantelung 52, ummantelt sein kann oder dass eine solche Ummantelung 52 auch zwei oder mehr Lichtleitfasern, wie in **Figur 5** gezeigt, gleichzeitig ummanteln kann, sodass ein transparenter Lichtleitfaser-Schlauches 51 gebildet wird. Die Ummantelung 52 kann dabei, insbesondere im Falle einer Lichtleitfaser 50, diese vollständig, insbesondere um den ganzen Umfang herum ummanteln; es kann aber auch vorgesehen sein, dass die Ummantelung nur über einen Teil des Umfanges der Lichtleitfaser 50 herum angeordnet ist.

Wenn in diesem Text und den Patentansprüchen daher von einer Lichtleitfaser (oder Lichtleitfaser 50") die Rede ist, kann damit auch eine ummantelte Lichtleitfaser oder ein Lichtleitfaser-Schlauch 51 mit darin befindlichen Lichtleitfasern 50, wie in **Figur 4** gezeigt, gemeint sein.

Die **Figuren 5a und 5b** zeigen nun grob schematische Beispiele für ein erfindungsgemäßes Scheibensystem 200, welches eine erfindungsgemäße transparente Scheibe 1 und ein oder wie gezeigt mehrere daran angeordnete Lichtleitfasern 50 angebracht umfasst, wie es bei den vorstehend beschriebenen Beleuchtungsvorrichtungen 100 zum Einsatz kommt.

Die Scheibe 1 umfasst, wie weiter oben schon beschrieben, einen transparenten Scheibenkörper 1a, der eine erste Fläche 2 - als Außenfläche 2 bezeichnet - und eine der ersten Fläche 2 gegenüberliegende zweite Fläche 3 - als Innenfläche 3 bezeichnet - aufweist, durch welche Flächen 2, 3 in der Beleuchtungsvorrichtung 100 durch die Lichtquelle 103 erzeugtes Licht in den Außenraum austreten kann.

Konkret zeigen die **Figuren 5a und 5b** eine Sicht auf die Innenfläche 3 des Scheibenkörpers 1a der Scheibe 1, wobei an der Innenfläche 3 - in diesem Beispiel mehrere - Haltevorrichtungen 10 zur Halterung von Lichtleitfasern 50 an dem Scheibenkörper 1a vorgesehen sind.

Wie in diesen Figuren angedeutet, weisen die Haltevorrichtungen 10 jeweils eine Vertiefung 11, in welcher die Lichtleitfasern 50 angeordnet und gehalten sind.

Die Vertiefungen 11 sind, wie dies in den weiteren Figuren noch genauer erörtert wird, in einem von dem Scheibenkörper 1a abgewandten Bereich offen ausgebildet, sodass von dieser Richtung bzw. Seite eine oder mehrere Lichtleitfasern 50 in die jeweilige Vertiefung 11 eingesetzt werden können.

Die Vertiefungen 11 bzw. Haltevorrichtungen 10 erstrecken sich über ein definierte Länge L entlang der Innenfläche 3, wie in **Figur 5b** angedeutet, und verlaufen im Wesentlichen parallel zu der Innenfläche 3. Die Vertiefungen 11 sind wie gezeigt über ihre Länge L durchgehend ausgebildet, können aber auch ein oder mehrere Unterbrechungen aufweisen.

Im ersten Fall erstreckt sich die Vertiefung durchgehend weitestgehend über die gesamte Länge der Lichtleitfaser, zumindest über jene Länge der Lichtleitfaser, welche im Bereich des Scheibenkörpers angeordnet ist. In den anderen Fällen weist die Vertiefung ein oder mehrere Unterbrechungen auf, insbesondere dadurch, dass in den Unterbrechungsbereichen keine Haltevorrichtung vorgesehen ist und dementsprechend sich die Haltevorrichtung in zwei oder mehrere voneinander getrennte, zueinander beabstandete Bereiche unterteilt ist, in jenen sich jeweils Abschnitte der Vertiefung befinden.

Haltevorrichtungen 10 können aus demselben Material wie der Scheibenkörper 1a gebildet sein, insbesondere aus einem transparenten Material, und es kann von Vorteil sein, wenn die Haltevorrichtung 10 einstückig mit dem Scheibenkörper 1a ausgebildet sind. Die Haltevorrichtungen können auch aus einem nicht transparenten Material gebildet sein, wenn die Haltevorrichtung derart ausgestaltet ist, dass diese der Lichtausbreitungsrichtung des aus der Lichtleitfaser austretenden Lichtes nicht im Weg steht.

Bevorzugt ist vorgesehen, dass die Haltevorrichtung 10 von der Innenfläche 3 der Abdeckscheibe 1 abstehend, insbesondere senkrecht abstehend ausgebildet ist.

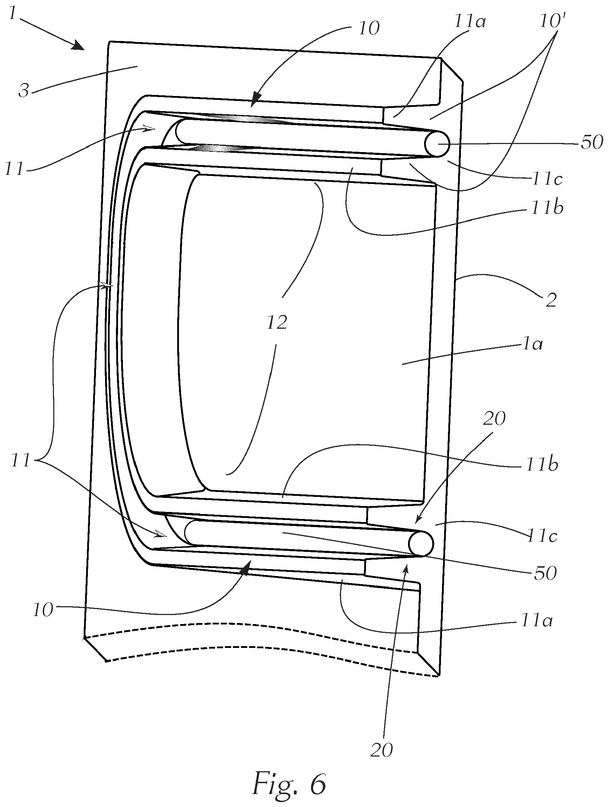

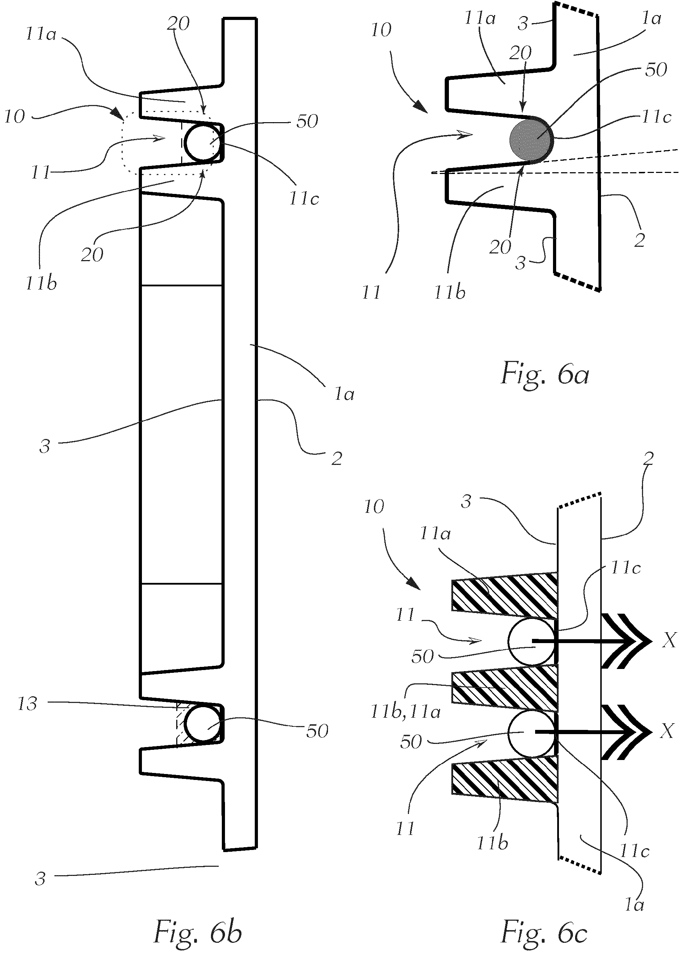

Die **Figuren 6** **und** **6a** zeigen eine erste konkrete Ausführungsform der Erfindung. Bei dieser Ausführungsform der Erfindung ist vorgesehen, dass die (zumindest eine) Vertiefung 11 nutförmig ausgebildet ist und von von der Innenfläche 3 des Scheibenkörper 1a abstehenden, insbesondere senkrecht abstehenden, vorzugsweise zueinander in Längserstreckung der Vertiefung 11 parallel verlaufenden Nutwangen 11a, 11b gebildet bzw. begrenzt ist.

Weiters sind, siehe insbesondere **Figur 6a****,** Haltemittel 20 vorgesehen, mit welchen die in der Vertiefung 11 angeordnete Lichtleitfaser 50 gehalten wird. Dabei sind im vorliegenden Beispiel die Haltemittel 20 von den Nutwangen 11a, 11b gebildet, indem die Nutwangen 11a, 11b derart ausgebildet und zueinander angeordnet sind, dass sie eine in die nutförmige Vertiefung 11 eingesetzte Lichtleitfaser 50 in der Vertiefung 11 einklemmen.

Die Haltevorrichtung 10 besteht in dem vorliegenden Beispiel somit aus einem Haltevorrichtungs-Körper 10', in welchem die Vertiefung 11 in Form einer Nut ausgebildet ist.

Die Nutwangen 11a, 11b bilden somit eine sich in Richtung des Scheibenkörpers 1a verjüngende Vertiefung 11, sodass die Lichtleitfaser 50, wenn ausreichend tief in die Vertiefung 11 eingeschoben, in dieser geklemmt wird.

Neben den Nutwangen weist die Nut noch einen Nutgrund 11c auf, welcher der Innenfläche 3 zugewandt. Der Nutgrund 11c kann gerade/eben (**Figur 6b, Figur 6c**) oder der Querschnittsform der Lichtleitfaser 50 korrespondierend (**Figur 6a**) ausgebildet sein. Es kann auch vorgesehen sein, dass die Nutwangen 11a, 11b in einem Abstand voneinander getrennt an der Innenfläche 3 ausgebildet sind, sodass der Nutgrund 11c durch die Innenfläche 3 der Abdeckscheibe selbst gebildet ist (**Figur 6b**), sodass Licht direkt und unbehindert von der Haltevorrichtung durch die Abdeckscheibe durchtreten kann.

Die Nutwangen 11a, 11b können parallel, vorzugsweise aber V-förmig (beispielsweise mit einer Formschräge von 0° -10°) oder konisch verlaufen, oder der Querschnitt der nutförmigen Vertiefung 11 kann schwalbenschwanzförmig ausgebildet sein.

**Figur 6c** zeigt dabei noch eine Ausführungsform, bei welcher sich zwei Vertiefungen 11 eine gemeinsame Nutwangen 11a, 11b, die mittlere der dargestellten Nutwangen, "teilen"

Die in der Nut 11 eingebettete Lichtleitfaser 50 (oder auch ein Lichtleitfaser-Schlauch 51) kann direkt in der Nut 11 eingeklemmt werden, optional kann noch vorgesehen sein, dass der freibleibende Bereich in der Nut zwischen Nutboden, Nutwangen und Lichtleitfaser 50 bzw. Schlauch 52 mit einem Füllmaterial, das vorzugsweise transparent ist, ausgefüllt ist, wodurch die Verbindung in der Nut stabilisiert wird. Diese Situation ist in **Figur 6b** schematisch gezeigt (Füllmaterial 13), wobei ein solches Füllmaterial auch in den Varianten nach **Figur 6a und 6c** vorgesehen sein kann.

Das Füllmaterial befindet sich beispielsweise lediglich auf der Rückseite der Lichtleitfaser, oder auf der Rückseite und den Seitenflächen oder auf allen 4 Seiten einschließlich der zur Abdeckscheibe gerichteten Vorderseite.

Das Füllmaterial ist dabei so beschaffen, dass es den ungehinderten Lichtaustritt aus der Lichtleitfaser zur Innen- und Außenfläche der Abdeckscheibe ermöglicht. Wird opakes Füllmaterial, beispielshaft transparentes Silikon als Flüssigkeit, welches in die Nut eingebracht und nach dem Einlegen der Lichtleitfaser ausgehärtet wird, verwendet, ist vorzugsweise vorgesehen, dass nur die Rückseite und/oder Seitenflächen der Lichtleitfaser oder des Lichtleitschlauches, also Bereiche, welche von dem Scheibenkörper 1a abgewandt sind, bedeckt ist/sind.

Falls kein Füllmaterial eingebracht wird, entsteht vorzugsweise ein Luftspalt zwischen dem Nutboden 11c und der Lichtleitfaser 50 bzw. dem Lichtleitfaser-Schlauch 51.

Die Richtung des Lichtaustritts aus den Lichtleitfasern ist in Figur 6c mit der Richtung X angedeutet.

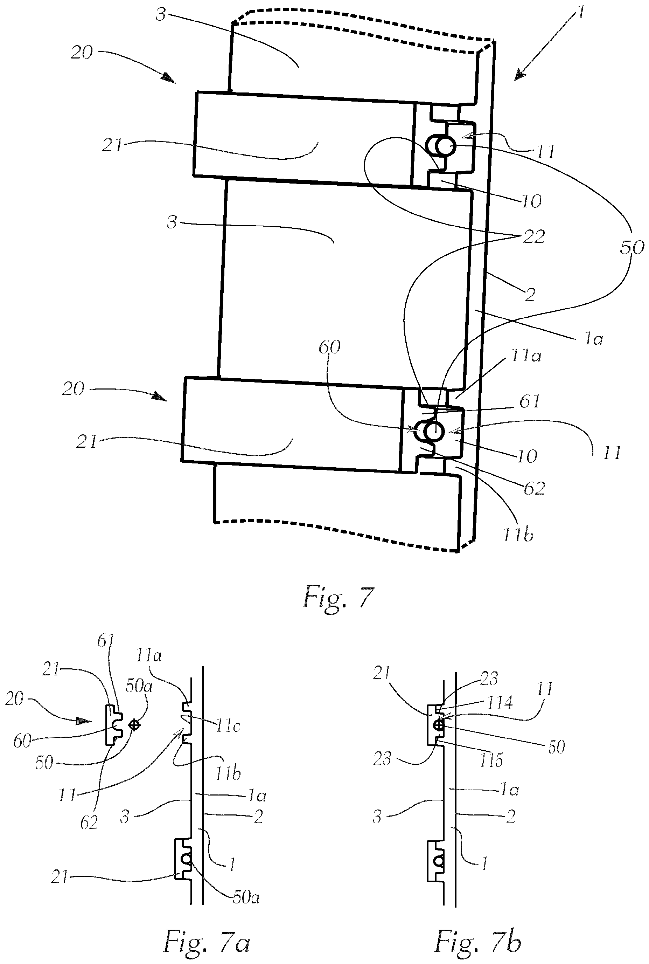

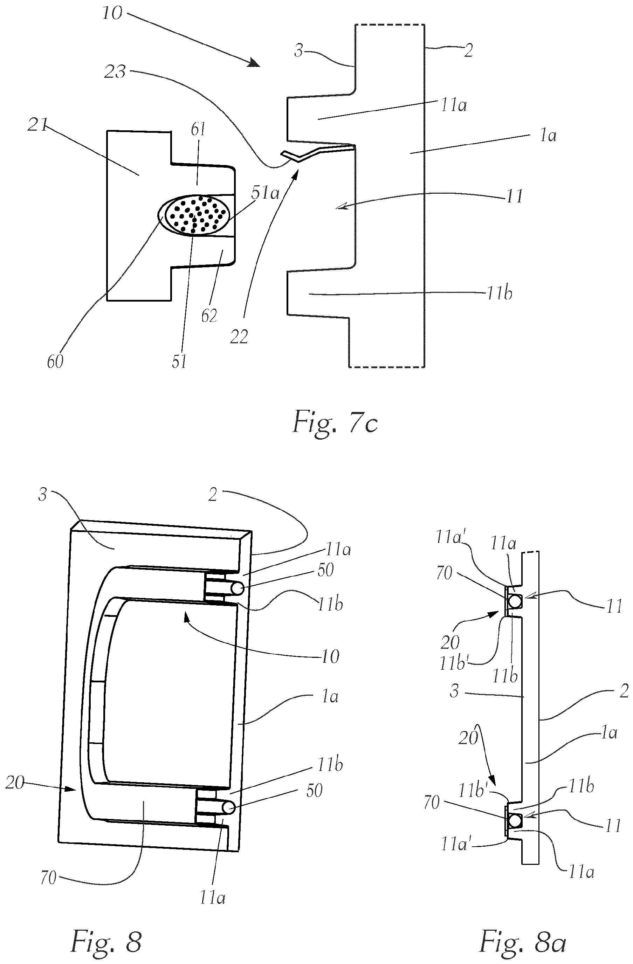

Die **Figuren 7** **und** **7a - 7c** zeigen eine zweite konkrete Ausführungsform der Erfindung. Bei dieser Ausführungsform der Erfindung ist vorgesehen, dass die zumindest eine Vertiefung 11 von Wangen 11a, 11b, die von der Innenfläche 3 der Abdeckscheibe 1, insbesondere senkrecht, abstehen und vorzugsweise in Längserstreckung der Vertiefung 11 zueinander parallel verlaufen, gebildet ist. Die Vertiefung 11 kann wiederum in Form einer Nut ausgebildet sein.

Die Haltemittel 20 umfassen ein Haltelement 21, in welchem die Lichtleitfaser 50 festsitzend angeordnet ist. Das Halteelement 21 ist derart ausgebildet, dass bei einem Zusammenfügen des Haltelementes 21 mit der Haltevorrichtung 10 die Lichtleitfaser 50 in die Vertiefung 11 eingesetzt wird, insbesondere, wie gezeigt, wird ein Zeil des Haltelementes 21, der die Lichtleitfaser 50 hält, in die Vertiefung 11 eingesetzt.

**Figur 7** zeigt eine perspektivische Ansicht der Abdeckscheibe, **Figur 7a** zeigt das einen Zustand, in welchem im oberen Bereich ein Halteelement 21 noch nicht in die Vertiefung 11 eingesetzt ist, während in **Figur 7b** beide gezeigten Halteelemente 21 in ihre zugeordneten Vertiefungen 11 eingesetzt sind.

Die Haltemittel 20 umfassen neben dem Haltelement 21 noch Fixiermittel 22, mit welchen das Halteelement 21 an der Haltevorrichtung 10 fixierbar ist, wie dies weiter unten noch beschrieben wird.

Die Lichtleitfaser 50 kann mit ihrem Haltelement 21 verklebt sein und/oder das Haltelement 21 weist mechanische Mittel zur Halterung der der Lichtleitfaser 50 auf. Die mechanischen Mittel können beispielsweise dadurch realisiert sein, dass in dem Halteelement 21 eine Vertiefung 60, begrenzt von zwei Wangen 61, 62, etwa in Form einer Nut, vorgesehen ist, in welcher Vertiefung 60 die Lichtleitfaser 50 eingeklemmt oder eingeklipst werden kann, oder alternativ oder zusätzlich in dieser Vertiefung verklebt ist. **Figur 7a** und, in vergrößerter Darstellung **Figur 7c****,** zeigen eine solche Vertiefung 60 gebildet aus Wangen 61, 62, in welche eine Lichtleitfaser 50 (**Figur 7a**) bzw. ein Lichtleitfaser-Schlauch 51 (**Figur 7c**) eingesetzt und gehalten ist.

In diesem Zusammenhang sei nochmals auf die weiter oben getätigten Ausführungen verwiesen, wonach die Formulierung *"zumindest eine Lichtleitfaser* ... *gehalten*/*fixiert*/*etc."* bedeuten kann, dass eine, aber auch zwei oder mehr Lichtleitfasern direkt von der jeweiligen Struktur gehalten/fixiert/etc. sind, dass diese Formulierung aber auch bedeuten kann, dass eine oder mehrere Lichtleitfasern, wie weiter oben beschrieben, mit einer Ummantelung versehen sind und diese Ummantelung gehalten/fixiert/etc. ist.

Das Halteelement 21 kann transparent, beispielsweise auch farbig oder intransparent ausgebildet sein.

Hinsichtlich der Fixierung des Halteelementes 21 an der Abdeckscheibe kann vorgesehen sein, dass das Haltelement 21 und die Fixiermittel 22 derart ausgebildet sind, dass die Lichtleitfaser 50 (der Lichtleitfaser-Schlauch 51) der Innenfläche 3 der Abdeckscheibe 1 mit einer freiliegenden Lichtleitfaser-Fläche 50a (Lichtleitfaser-Schlauch-Fläche 51a) zugewandt ist. "Freiliegend" bedeutet in diesem Zusammenhang, dass die Fläche 50a, 51a nicht von dem Halteelement 21 überdeckt ist.

Beispielsweise kann vorgesehen sein, dass die Fixiermittel Klebemittel oder eine mechanische Verbindung zwischen dem zumindest einen Halteelement 21 und der Haltevorrichtung 10, z.B. ein Verklipsen des zumindest einen Halteelementes 21 mit der Haltevorrichtung 10, oder eine Schweißverbindung zwischen dem zumindest einen Halteelement 21 und der Haltevorrichtung 10 umfassen.

Das Haltelement 21 selbst kann an der Haltevorrichtung 11 somit z.B. geklebt, (laser)geschweißt oder geklammert. Das Halteelement 21 kann komplementär zu der Haltevorrichtung 10, insbesondere zu der Vertiefung 11 ausgebildet sein, sodass es formschlüssig von diesem gehalten wird.

**Figur 7c** zeigt eine weitere Ausgestaltung der Fixiermittel 22. Gemäß dieser Figur kann vorgesehen sein, dass die Fixiermittel 22 zumindest ein elastische ausgebildetes Federelement 23 umfassen, welches vorzugsweise in der Vertiefung 11 angeordnet ist, und welches bei in die Vertiefung 11 eingesetztem Halteelement 21 eine Rückstellkraft auf das Halteelement 21 derart ausübt, dass das Halteelement 21 und somit die Lichtleitfaser - bzw. in dem gezeigten Beispiel ein Lichtleitfaser-Schlauch 51 - in der Vertiefung 11 mechanisch gehalten wird.

Das Federelement 23 ist in dem gezeigten Beispiel in der Vertiefung 11 an der Wange 11a der Vertiefung 11 angebracht und drückt auf das Haltelement 21, wenn dieses in die Vertiefung 11 eingesetzt ist.

Die **Figuren 8 und 8a** zeigen eine dritte konkrete Ausführungsform der Erfindung. Bei dieser Ausführungsform ist vorgesehen, dass die zumindest eine Vertiefung 11 von Wangen 11a, 11b, die von der Innenfläche 3 des Scheibenkörpers 1a, insbesondere senkrecht, abstehen und vorzugsweise in Längserstreckung der zumindest einen Vertiefung 11 zueinander parallel verlaufen, gebildet ist, und wobei die Höhe der Wangen 11a, 11b gemessen von der Innenfläche 3 des Scheibenkörpers 1a derart ist, dass die zumindest eine in die Vertiefung 11 eingesetzte Lichtleitfaser 50 aus der Vertiefung 11 hervorsteht oder gerade nicht hervorsteht, also in etwa plan mit der oberen Begrenzungsfläche 11a', 11b' der Wangen 11a, 11b abschließt.

Die Haltemittel 20 können z.B. eine Folie 70, welche auf den Wangen 11a, 11b, insbesondere auf deren oberen Begrenzungsflächen 11a', 11b' derart auffoliert ist, dass die Lichtleitfaser 50 in die Vertiefung 11, und vorzugsweise gegen die Innenfläche 3 des Scheibenkörpers 1a, gepresst ist bzw. dagegengehalten ist, umfassen.

Die Folie, z.B. eine Klebefolie, ist derart auf die oberen Begrenzungsflächen der Wangen ("Wangen-Kopfendflächen") foliert, sodass die Öffnung der Vertiefung 11 abgeschlossen ist und die Lichtleitfasern im Innenraum gehalten werden.

## Patentansprüche

1. Transparente Scheibe (1), wobei die Scheibe (1) einen für Licht transparenten Scheibenkörper (1a), der von einer ersten Fläche (2) - als Außenfläche (2) bezeichnet - und einer der ersten Fläche (2) gegenüberliegenden zweiten Fläche (3) - als Innenfläche (3) bezeichnet - begrenzt wird, wobei an dem Scheibenkörper (1a) zumindest eine Haltevorrichtung (10) zur Halterung von zumindest einer Lichtleitfaser (50) an dem Scheibenkörper (1a) angeordnet ist,
**dadurch gekennzeichnet, dass**
die Haltevorrichtung (10) an der Innenfläche (3) des Scheibenkörpers (1a) angebracht ist und die Haltevorrichtung (10) zumindest eine Vertiefung (11) aufweist, die sich über eine Länge (L) entlang der Innenfläche (3) und im Wesentlichen parallel zu der Innenfläche (3) erstreckt, wobei die zumindest eine Vertiefung (11) in einem von dem Scheibenkörper (1a) abgewandten Bereich (12) offen ausgebildet ist, sodass zumindest eine Lichtleitfaser (50) von einer der Innenfläche (3) des Scheibenkörpers (1a) abgewandten Seite in die zumindest eine Vertiefung (11) eingesetzt werden kann, und wobei weiters Haltemittel (20) vorgesehen sind, mit welchen die zumindest eine in der zumindest einen Vertiefung (11) angeordnete Lichtleitfaser (50) gehalten werden kann.

2. Scheibe nach Anspruch 1, **wobei** die Haltevorrichtung (10) aus demselben Material wie der Scheibenkörper (1a) gebildet ist.

3. Scheibe nach einem der vorhergehenden Ansprüche, **wobei** die Haltevorrichtung (10) einstückig mit dem Scheibenkörper (1a) ausgebildet ist.

4. Scheibe nach einem der vorhergehenden Ansprüche, **wobei** die Haltevorrichtung (10) von der Innenfläche (3) des Scheibenkörpers (1a) abstehend, insbesondere senkrecht abstehend ausgebildet ist.

5. Scheibe nach einem der vorhergehenden Ansprüche, **wobei** die Vertiefung (11) über ihre Länge (L) durchgehend ausgebildet ist oder ein oder mehreren Unterbrechungen aufweist.

6. Scheibe nach einem der vorhergehenden Ansprüche, **wobei** die Haltevorrichtung (10) zumindest teilweise aus einem transparenten Material gebildet ist.

7. Scheibe nach einem der vorhergehenden Ansprüche, **wobei** die zumindest eine Vertiefung (11) nutförmig ausgebildet ist und von von der Innenfläche (3) des Scheibenkörpers (1a) abstehenden, vorzugsweise zueinander in Längserstreckung der zumindest einen Vertiefung (11) parallel verlaufenden, Nutwangen (11a, 11b) gebildet bzw. begrenzt ist, und wobei die Haltemittel (20) von den Nutwangen (11a, 11b) gebildet sind, indem die Nutwangen (11a, 11b) derart ausgebildet und zueinander angeordnet sind, dass sie eine in die zumindest eine nutförmige Vertiefung (11) eingesetzte Lichtleitfaser (50) in der Vertiefung (11) einklemmen.

8. Scheibe nach einem der Ansprüche 1 bis 6, **wobei** die zumindest eine Vertiefung (11) von Wangen (11a, 11b), die von der Innenfläche (3) des Scheibenkörpers (1a) abstehen und vorzugsweise in Längserstreckung der zumindest einen Vertiefung (11) zueinander parallel verlaufen, gebildet ist, und wobei die Haltemittel (20) zumindest ein Haltelement (21) umfassen, in welchem die zumindest eine Lichtleitfaser (50) festsitzend angeordnet ist, und wobei das zumindest eine Halteelement (21) derart ausgebildet ist, dass bei einem Zusammenfügen des Haltelementes (21) mit der Haltevorrichtung (10) die zumindest eine Lichtleitfaser (50) in die Vertiefung (11) eingesetzt ist, und wobei die Haltemittel (20) weiters Fixiermittel (22) umfassen, mit welchen das Halteelement (21) an der Haltevorrichtung (10) fixierbar ist.

9. Scheibe nach Anspruch 8, **wobei** die zumindest eine Lichtleitfaser (50) mit dem zumindest einen Haltelement (21) verklebt ist und/oder das Haltelement (21) mechanische Mittel zur Halterung der zumindest einen Lichtleitfaser (50) aufweist.

10. Scheibe nach Anspruch 8 oder 9, **wobei** das Haltelement (21) und die Fixiermittel (22) derart ausgebildet sind, dass die Lichtleitfaser (50) der Innenfläche (3) des Scheibenkörpers (1a) mit einer freiliegenden Lichtleitfaser-Fläche (50a) zugewandt ist.

11. Scheibe nach einem der Ansprüche 8 bis 10, **wobei** die Fixiermittel (22) Klebemittel oder eine mechanische Verbindung zwischen dem zumindest einen Halteelement (21) und der Haltevorrichtung (10), z.B. ein Verklipsen des zumindest einen Halteelementes (21) mit der Haltevorrichtung (10), oder eine Schweißverbindung zwischen dem zumindest einen Halteelement (21) und der Haltevorrichtung (10) umfassen.

12. Scheibe nach einem der Ansprüche 8 bis 10, **wobei** die Fixiermittel (22) zumindest ein elastisches ausgebildetes Federelement (23) umfassen, welches vorzugsweise in der Vertiefung (11) angeordnet ist, und welches bei in die Vertiefung (11) eingesetztem Halteelement (21) eine Rückstellkraft auf das Halteelement (21) bzw. auf die zumindest eine Lichtleitfaser (50) derart ausübt, dass das Halteelement (21) in der Vertiefung (11) gehalten ist.

13. Scheibe nach einem der Ansprüche 1 bis 6, **wobei** die zumindest eine Vertiefung (11) von Wangen (11a, 11b), die von der Innenfläche (3) des Scheibenkörpers (1a) abstehen und vorzugsweise in Längserstreckung der zumindest einen Vertiefung (11) zueinander parallel verlaufen, gebildet ist, und wobei zumindest eine Lichtleitfaser (50) in die zumindest eine Vertiefung (11) eingesetzt werden kann, wobei eine Höhe der Wangen (11a, 11b) gemessen von der Innenfläche (3) des Scheibenkörpers (1a) derart ist, dass die zumindest eine Lichtleitfaser (50) aus der Vertiefung (11) hervorsteht oder gerade nicht hervorsteht, und wobei die Haltemittel (20) eine Folie (70) umfassen, welche auf den Wangen (11a, 11b) derart auffoliert ist, dass die zumindest eine Lichtleitfaser (50) in die Vertiefung (11), und vorzugsweise gegen die Innenfläche (3) des Scheibenkörpers (1a), gepresst ist.

14. Scheibe (1) nach einem der vorhergehenden Ansprüche, **wobei** die Scheibe (1) dazu eingerichtet ist, ein Gehäuse (101) einer Beleuchtungsvorrichtung (100) zu verschließen, wobei die Innenfläche (3) des Scheibenkörpers (1a) in einem an der Beleuchtungsvorrichtung (100) befestigten Zustand der Scheibe (1) einem Gehäuseinnenraum (102), der von der Scheibe (1) und dem Gehäuse (101) gebildet wird, zugewandt ist.

15. Abdeckscheibensystem (200) umfassend eine Abdeckscheibe (1) nach einem der vorhergehenden Ansprüche sowie eine oder mehrere Lichtleitfasern (50), welche von der Haltevorrichtung (10) an dem Scheibenkörper (1a) gehalten ist bzw. sind.

16. Beleuchtungsvorrichtung (100) mit einer transparenten Scheibe (1), **wobei** die transparente Scheibe (1) als Scheibe (1) nach einem der Ansprüche 1 bis 14 ausgebildet ist.

17. Beleuchtungsvorrichtung nach Anspruch 16, umfassend ein oder mehrere Zusatzlichtquellen (113), welche dazu eingerichtet ist/sind, Licht in die zumindest eine Lichtleitfaser (50), welche an der Abdeckscheibe (1) gehalten ist, einzuspeisen.

18. Beleuchtungsvorrichtung nach Anspruch 16 oder 17, umfassend zumindest eine Lichtquelle (103), wobei die Beleuchtungsvorrichtung (100) dazu eingerichtet ist, mit der zumindest einen Lichtquelle (103) ein oder mehrere Lichtfunktionen zu realisieren, wobei die transparente Scheibe (1) derart im Strahlengang der zumindest einen Lichtquelle (103) derart ist, dass von der zumindest einen Lichtquelle (103) emittiertes Licht auf die Innenfläche (3) des Scheibenkörpers (1a) auftreffen und durch diesen durchtreten kann.

19. Beleuchtungsvorrichtung nach einem der Ansprüche 16 bis 18, **umfassend** ein Gehäuse (101), welches von der Scheibe (1) abgeschlossen ist, wobei die zumindest eine Lichtquelle (103) und/oder die zumindest eine Zusatzlichtquelle (113) in dem Gehäuse (101) angeordnet ist bzw. sind.

20. Beleuchtungsvorrichtung nach einem der Ansprüche 16 bis 19, wobei die Beleuchtungsvorrichtung als Wohnraum- oder Arbeitsraumbeleuchtungsvorrichtung ausgebildet ist, beispielsweise als Deckenleuchte oder Stehleuchte, oder als Straßenbeleuchtung, leuchtendes Hinweisschild oder Fassaden-Außenbeleuchtungsvorrichtung.

21. Kraftfahrzeugleuchte, wobei die Kraftfahrzeugleuchte als Kraftfahrzeugscheinwerfer oder Heckleuchte ausgebildet ist oder in einem Kraftfahrzeugscheinwerfer oder in einer Heckleuchte angeordnet ist, oder als Fahrzeuginnenraumleuchte oder als Fahrzeug-Bodenprojektionsleuchte ausgebildet ist, **wobei** die Kraftfahrzeugleuchte zumindest eine Beleuchtungsvorrichtung (100) nach einem der Ansprüche 16 bis 19 umfasst.
